# EUROPÄISCHE PATENTSCHRIFT

(11) **EP 2 738 380 B1**
(45) Veröffentlichungstag und Bekanntmachung des Hinweises auf die Patenterteilung: **21.02.2018**
(21) Anmeldenummer: 12194581.0
(22) Anmeldetag: 28.11.2012
(51) Int. Cl.: F16L 9/02, F16L 9/04, F02M 55/00, F02M 55/02, F02M 37/00, F02M 69/46

(54) **Kraftstoffleitung**
Steel multilayer tube for gasoline direct injection engines
Conduite de carburant

(43) Veröffentlichungstag der Anmeldung: 04.06.2014
(73) Patentinhaber: TI Automotive (Heidelberg) GmbH, 69123 Heidelberg (DE)
(72) Erfinder: Fiedler, Uwe, 68804 Altlussheim (DE)
(74) Vertreter: Rohmann, Michael

(56) Entgegenhaltungen:
- GB-A- 2 265 961
- GB-A- 2 312 486
- JP-A- 11 044 277
- US-A1- 2005 284 447

## Beschreibung

Die Erfindung betrifft eine Kraftstoffleitung, insbesondere eine Kraftstoffleitung für ein Benzindirekteinspritzungsleitungssystem.
Kraftstoffleitungen der vorstehend genannten Art sind aus der Praxis grundsätzlich bekannt. Diese Kraftstoffleitungen können einen mehrschichtigen Aufbau aufweisen, um den in Benzindirekteinspritzungsleitungssystemen herrschenden Drücken zuverlässig zu widerstehen. Nachteilig bei den aus der Praxis bekannten Kraftstoffleitungen (wie offenbart in GB2265961 und GB2312486) ist der hohe Materialeinsatz, der zu deren Herstellung erforderlich ist. Dadurch weisen die aus der Praxis bekannten Kraftstoffleitungen ein unvorteilhaft hohes Gewicht auf.
Der Erfindung liegt daher das technische Problem zugrunde, eine Kraftstoffleitung der eingangs genannten Art anzugeben, die sich durch eine hohe Druckbeständigkeit und ein geringes Gewicht auszeichnet.

Zur Lösung des technischen Problems lehrt die Erfindung eine Kraftstoffleitung, insbesondere eine Kraftstoffleitung für ein Benzindirekteinspritzungsleitungssystem, mit einem Innenstahlrohr und einem Außenstahlrohr, wobei das Innenstahlrohr kraftschlüssig in dem Außenstahlrohr aufgenommen ist, wobei das Innenstahlrohr aus einem korrosionsbeständigen Stahl gefertigt ist, wobei das Außenstahlrohr aus einer Außenstahlrohrlegierung gefertigt ist, wobei eine Wandstärke des Innenstahlrohrs kleiner als eine Wandstärke des Außenstahlrohrs ist, wobei ein maximaler Kohlenstoffgehalt der Außenstahlrohrlegierung höher ist als ein maximaler Kohlenstoffanteil des korrosionsfreien Stahls und wobei eine Dicke der Kraftfahrzeugleitung zwischen 5 % und 60 % eines Innendurchmessers der Kraftfahrzeugleitung beträgt. Bevorzugt wird die Kraftstoffleitung in Brennkraftmaschinen, besonders bevorzugt in Ottomotoren mit einer Benzindirekteinspritzung verwendet. Es empfiehlt sich, dass die Kraftstoffleitung druckfest bis zu einem Druck von 200 bar und vorzugsweise von 250 bar ist. Der korrosionsbeständige Stahl ist ein vorzugsweise rostfreier Stahl und/oder ein bevorzugt gegenüber Kraftstoffen beständiger Stahl.

Besonders bevorzugt ist das Innenstahlrohr irreversibel in dem Außenstahlrohr angeordnet. Zweckmäßigerweise liegt eine äußere Mantelfläche des Innenstahlrohrs formschlüssig an einer inneren Oberfläche des Außenstahlrohrs an. Besonders bevorzugt liegt das Innenstahlrohr spaltfrei an dem Außenstahlrohr an. Es liegt im Rahmen der Erfindung, dass eine einen Strömungskanal in der Kraftstoffleitung beschränkende, innere Oberfläche bzw. Innenseite des Innenstahlrohrs beschichtungsfrei ausgebildet ist. Vorzugsweise sind auf der strömungskanalseitigen Innenseite des Innenstahlrohrs keine weiteren Beschichtungen aufgebracht.

Empfohlenermaßen ist die Wandstärke des Außenstahlrohrs bis zu eineinhalbmal, vorzugsweise bis zu zweimal und gemäß einer Ausführungsform bis zu dreimal so groß wie die Wandstärke des Innenstahlrohrs. Die Dicke der Kraftfahrzeugleitung meint insbesondere eine Summe der Wandstärke des Innenstahlrohrs und der Wandstärke des Außenstahlrohrs. Bevorzugt beträgt die Dicke der Kraftstoffleitung 10 bis 60 % und vorzugsweise 20 bis 50 % des Innendurchmessers der Kraftstoffleitung. Bevorzugt ist der Innendurchmesser der Kraftstoffleitung ein innerer Durchmesser des Innenstahlrohrs bzw. der Durchmesser des Strömungskanals. Besonders bevorzugt weist der Strömungskanal einen kreisförmigen Querschnitt auf.

Gemäß einer Ausführungsform beträgt die Dicke der Kraftstoffleitung zumindest 0,5 mm. In einer bevorzugten Ausführungsform weist die Kraftstoffleitung eine Dicke von 0,5 mm bis 2,5 mm und empfohlenermaßen von 1,0 bis 1,5 mm auf. Vorteilhafterweise weist das Innenstahlrohr eine Wandstärke von 0,05 mm bis 1,00 mm auf. Bevorzugt verfügt das Innenstahlrohr über eine Wandstärke von 0,10 mm bis 1,00 mm und besonders bevorzugt von 0,5 mm bis 1,0 mm. Zweckmäßigerweise weist das Außenstahlrohr eine Wandstärke von 0,3 mm bis 2 mm auf. Empfohlenermaßen beträgt die Wandstärke des Außenstahlrohrs 0,5 mm bis 1,5 mm.

Gemäß einer Ausführungsform weist das Außenstahlrohr einen Außendurchmesser von bis zu 20 mm und/oder das Innenstahlrohr einen Innendurchmesser von bis zu 10 mm auf. Empfohlenermaßen weist das Außenstahlrohr einen Außendurchmesser von bis zu 16 mm und bevorzugt von bis zu 10 mm auf. Es liegt im Rahmen der Erfindung, dass das Innenstahlrohr einen Innendurchmesser von bis zu 8 mm und bevorzugt von bis zu 5 mm aufweist. Besonders bevorzugt beträgt der Innendurchmesser des Innenstahlrohrs 5 mm bzw. ungefähr 5 mm. Der Außendurchmesser des Außenstahlrohrs beträgt vorzugsweise zwischen 6 mm und 10 mm, empfohlenermaßen zwischen 7 mm und 9 mm und besonders bevorzugt 8 mm bzw. ungefähr 8 mm.

Vorzugsweise ist der maximale Kohlenstoffgehalt des korrosionsbeständigen Stahls kleiner oder gleich 0,07 Gew.-%, wobei der maximale Kohlenstoffgehalt der Außenstahlrohrlegierung kleiner oder gleich 0,10 Gew.-% ist. Maximaler Kohlenstoffgehalt meint im Rahmen der Erfindung den Kohlenstoffgehalt des korrosionsbeständigen Stahls bzw. der Außenstahlrohrlegierung, der höchstens in dem korrosionsbeständigen Stahl bzw. höchstens in der Außenstahlrohrlegierung enthalten sein kann. Das Außenstahlrohr besteht zweckmäßigerweise aus der Außenstahlrohrlegierung. Der korrosionsbeständige Stahl enthält neben Eisen vorzugsweise 17,0 bis 19,5 Gew.-% Chrom und 8,0 bis 10,5 Gew.-% Nickel. Beispielsweise ist der korrosionsbeständige Stahl ein Stahl mit der Werkstoff Nr. 1.4301 gemäß DIN EN 10216-5. Vorzugsweise weist die Außenstahlrohrlegierung einen maximalen Kohlenstoffgehalt von 0,08 Gew.-% auf. Die Außenstahlrohrlegierung ist beispielsweise ein gemäß EN 10139 als DC03 oder DC04 bezeichneter Stahl.

Es liegt im Rahmen der Erfindung, dass eine Zugfestigkeit der Außenstahlrohrlegierung niedriger als eine Zugfestigkeit des korrosionsbeständigen Stahls ist. Vorzugsweise weist der korrosionsbeständige Stahl eine Zugfestigkeit von bis zu 750 N/mm² und/oder die Außenstahlrohrlegierung eine Zugfestigkeit von bis zu 370 N/mm². Bevorzugt ist die Zugfestigkeit des korrosionsbeständigen Stahls größer als 500 N/mm². Die Außenstahllegierung weist vorzugsweise eine Zugfestigkeit von zumindest 270 N/mm² und bevorzugt von zumindest 350 N/mm² auf.

Gemäß einer bevorzugten Ausführungsform ist das Innenstahlrohr ein nahtloses Stahlrohr. Vorzugsweise ist das Innenrohr ein einwandiges, nahtloses Stahlrohr. Vorteilhafterweise ist das Innenstahlrohr ein einwandiges, aus einem Stahlband durch Rollen hergestelltes Stahlrohr, wobei das Innenstahlrohr als geschweißtes, einwandiges Stahlrohr ausgebildet ist. Zweckmäßigerweise werden zur Ausbildung des einwandigen, geschweißten Stahlrohrs aneinanderstoßende Kanten des Stahlbandes miteinander verschweißt. Es ist möglich, dass das Innenstahlrohr ein doppelwandiges, vorzugsweise gelötetes Stahlrohr ist. Es empfiehlt sich, dass zur Herstellung des doppelwandigen Stahlrohrs eine Oberfläche eines Stahlbandes mit einem Lot, beispielsweise mit Kupfer, beschichtet wird. Das mit dem Lot beschichtete Stahlband wird derart aufgerollt, dass sich die Kupferbeschichtung auf einer Außenoberfläche und/oder Innenoberfläche des doppelwandigen Stahlrohrs befindet. Es erfolgt zweckmäßigerweise ein Verlöten der beiden Rohrwände mit Hilfe der Lotbeschichtung.

Es empfiehlt sich, dass das Außenstahlrohr ein vorzugsweise aus einem Stahlband gefertigtes Stahlrohr ist, wobei das Außenstahlrohr als geschweißtes, einwandiges Stahlrohr ausgebildet ist. Das einwandige, geschweißte, das Außenstahlrohr bildende Stahlrohr ist beispielsweise aus einem zweckmäßigerweise von der Außenstahlrohrlegierung gebildeten Stahlband erhältlich. Zweckmäßigerweise wird das Stahlband derart gerollt, dass Längskanten des Stahlbandes aneinander stoßen und zur Ausbildung des einwandigen, geschweißten Stahlrohrs miteinander verschweißt werden. Es liegt im Rahmen der Erfindung, dass das Außenstahlrohr ein doppelwandiges, vorzugsweise durch Rollen eines Stahlbandes hergestelltes Stahlrohr ist. Empfohlenermaßen wird zumindest eine Oberfläche des Stahlbandes mit einer Lotschicht, beispielsweise mit einer Kupferschicht, beschichtet, woraufhin das beschichtete Stahlband derart zu einem doppelwandigen Stahlrohr gerollt wird, dass sich die Lotbeschichtung auf einer Innenoberfläche und/oder Außenoberfäche des doppelwandigen Stahlrohrs befindet. Empfohlenermaßen werden die beiden Rohrwände mit Hilfe der Lotbeschichtung miteinander verlötet.

Es ist möglich, dass das Innenstahlrohr mit dem Außenstahlrohr verlötet ist. Empfohlenermaßen ist auf einer innenstahlrohrseitigen Oberfläche des Außenstahlrohrs und/oder auf einer äußeren Mantelfläche des Innenstahlrohrs zumindest bereichsweise eine Lotschicht, vorzugsweise eine Kupferlotschicht, aufgetragen, durch welche Lotschicht das Außenstahlrohr mit dem Innenstahlrohr verbunden ist. Vorteilhafterweise ist der korrosionsbeständige Stahl des Innenstahlrohrs stoffschlüssig an die Außenstahlrohrlegierung des Außenstahlrohrs angeschlossen.

Es liegt im Rahmen der Erfindung, dass das Innenstahlrohr vorzugsweise lotfrei mit dem Außenstahlrohr verpresst ist. Zweckmäßigerweise wird das Innenstahlrohr in das Außenstahlrohr eingeführt, wobei der Innendurchmesser des Außenstahlrohrs zumindest so groß wie der Außendurchmesser des Innenstahlrohrs ist. Durch Ziehen bzw. durch einen Ziehprozess wird das Außenstahlrohr verformt bzw. über seine vorzugsweise vollständige bzw. im Wesentlichen vollständige Länge verjüngt, so dass die innere Oberfläche des Außenstahlrohrs formschlüssig und kraftschlüssig auf der äußeren Mantelfläche des Innenstahlrohrs aufliegt.

Gemäß einer Ausführungsform ist auf dem Außenstahlrohr eine Verstärkungsschicht angeordnet. Es ist möglich, dass die Verstärkungsschicht aus einer Metalllegierung, beispielsweise einem Stahl, gefertigt ist, welche Metalllegierung vorzugsweise eine höhere Zugfestigkeit als die Außenstahlrohrlegierung aufweist. Bevorzugt ist die Verstärkungsschicht aus der Außenstahlrohrlegierung gefertigt. Zweckmäßigerweise ist die Verstärkungsschicht als einwandiges, vorzugsweise verschweißtes Rohr ausgebildet. Gemäß einer weiteren Ausführungsform ist die Verstärkungsschicht als doppelwandiges, vorzugsweise gelötetes Rohr ausgebildet. In vorteilhafter Weise wird durch die Verstärkungsschicht die mechanische Festigkeit der Kraftstoffleitung verbessert.

Der Erfindung liegt die Erkenntnis zugrunde, dass sich eine erfindungsgemäße Kraftstoffleitung durch eine hohe Druckbeständigkeit bei gleichzeitig geringem Gewicht bzw. Materialeinsatz auszeichnet. Wesentlich bei der erfindungsgemäßen Kraftstoffleitung ist, dass das Innenstahlrohr hauptsächlich als Korrosionsschutzschicht für das Außenstahlrohr fungiert und mit einer wesentlich geringeren Wandstärke als das Außenstahlrohr ausgelegt werden kann. Auf diese Weise ist die Fertigung der erfindungsgemäßen Kraftstoffleitung äußerst wirtschaftlich. Durch die erfindungsgemäße Ausbildung des Innenstahlrohrs und des Außenstahlrohrs wird zudem eine korrosionsbeständige Kraftstoffleitung angegeben, mit der problemlos korrosive Komponente enthaltende Kraftstoffe, vorzugsweise Ottokraftstoffe, gehandhabt werden können. Die erfindungsgemäße Kraftstoffleitung zeichnet sich durch eine hohe mechanische Festigkeit und Haltbarkeit aus, die problemlos in Benzindirekteinspritzungsleitungssystemen auftretenden rhythmischen bzw. wiederkehrenden Drucksprüngen widersteht.

Nachfolgend wird die Erfindung anhand einer lediglich ein Ausführungsbeispiel darstellenden Zeichnung zusätzlich erläutert. Es zeigen schematisch:
- Fig. 1: eine erfindungsgemäße Kraftstoffleitung in einer ersten Ausführungsform und
- Fig. 2: eine erfindungsgemäße Kraftstoffleitung in einer zweiten Ausführungsform.

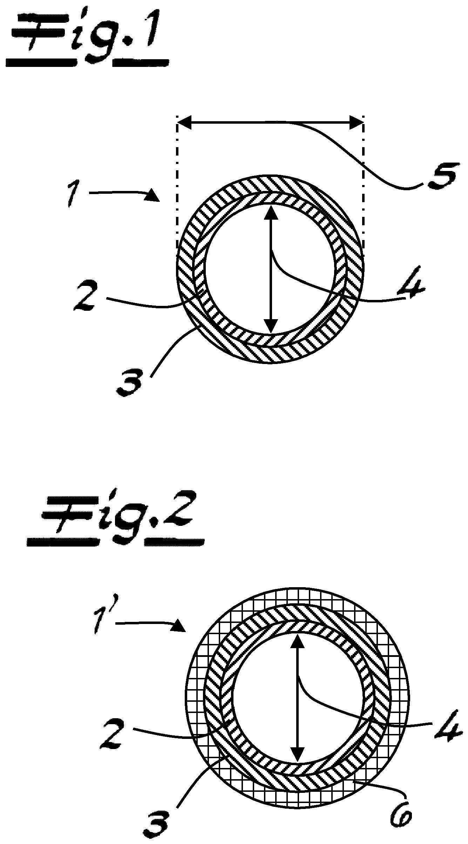

In Fig. 1 ist eine Kraftstoffleitung 1 dargestellt, die ein Innenstahlrohr 2 und ein Außenstahlrohr 3 aufweist. Vorzugsweise und gemäß Fig. 1 besteht die Kraftstoffleitung 1 lediglich aus dem vorzugsweise nahtfreien Innenstahlrohr 2 und dem bevorzugt doppelwandigen Außenstahlrohr 3. Das Innenstahlrohr 2 weist gemäß Fig. 1 einen Innendurchmesser 4 von 5 mm auf. Der von dem Außenstahlrohr 3 bestimmte Außendurchmesser 5 beträgt in dem Ausführungsbeispiel gemäß Fig. 1 8 mm. In Fig. 1 ist gezeigt, dass eine Wandstärke des Innenstahlrohrs 2 0,7 mm beträgt, während eine Wandstärke des Außenstahlrohrs 3 0,8 mm beträgt. Die Kraftstoffleitung 1 gemäß Fig. 1 zeichnet sich durch eine Druckbeständigkeit bis 250 bar aus.

Der Aufbau der Kraftstoffleitung 1' gemäß Fig. 2 entspricht hinsichtlich der Ausbildung des Innenstahlrohrs 2 und des Außenstahlrohrs 3 der Kraftstoffleitung 1 gemäß Fig. 1. Zusätzlich zu dem Innenstahlrohr 2 und dem Außenstahlrohr 3 weist die Kraftstoffleitung 1' gemäß Fig. 2 eine Verstärkungsschicht 6 auf, die gemäß Fig. 2 formschlüssig auf einer äußeren Mantelfläche des Außenstahlrohrs 3 aufliegt. Durch die Verstärkungsschicht 6 erfährt die Kraftstoffleitung 1' eine zusätzliche Verbesserung der mechanischen Festigkeit.

## Patentansprüche

1. Kraftstoffleitung, insbesondere Kraftstoffleitung für ein Benzindirekteinspritzungsleitungssystem, mit einem Innenstahlrohr (2) und einem Außenstahlrohr (3), wobei das Innenstahlrohr (2) kraftschlüssig in dem Außenstahlrohr (3) aufgenommen ist, wobei das Innenstahlrohr (2) aus einem korrosionsbeständigen Stahl gefertigt ist, wobei das Außenstahlrohr (3) aus einer Außenstahlrohrlegierung gefertigt ist, wobei eine Wandstärke des Innenstahlrohrs (2) kleiner als eine Wandstärke des Außenstahlrohrs (3) ist, **dadurch gekennzeichnet daß** ein maximaler Kohlenstoffgehalt der Außenstahlrohrlegierung höher als ein maximaler Kohlenstoffanteil des korrosionsbeständigen Stahls ist und eine Dicke der Kraftstoffleitung (1, 1') zwischen 5 % und 60 % eines Innendurchmessers (4) der Kraftstoffleitung (1, 1') beträgt.

2. Kraftstoffleitung nach Anspruch 1, wobei die Dicke der Kraftstoffleitung (1, 1') zumindest 0,5 mm beträgt.

3. Kraftstoffleitung nach einem der Ansprüche 1 oder 2, wobei das Innenstahlrohr (2) eine Wandstärke von 0,05 mm bis 1,00 mm aufweist.

4. Kraftstoffleitung nach einem der Ansprüche 1 bis 3, wobei das Außenstahlrohr (3) eine Wandstärke von 0,3 mm bis 2 mm aufweist.

5. Kraftstoffleitung nach einem der Ansprüche 1 bis 4, wobei das Außenstahlrohr (3) einen Außendurchmesser (5) von bis zu 20 mm und/oder wobei das Innenstahlrohr (2) einen Innendurchmesser (4) von bis zu 10 mm aufweist.

6. Kraftstoffleitung nach einem der Ansprüche 1 bis 5, wobei der maximale Kohlenstoffgehalt des korrosionsbeständigen Stahls kleiner oder gleich 0,07 Gew.-% ist und wobei der maximale Kohlenstoffgehalt der Außenstahlrohrlegierung kleiner oder gleich 0,10 Gew.-% ist.

7. Kraftstoffleitung nach einem der Ansprüche 1 bis 6, wobei eine Zugfestigkeit der Außenstahlrohrlegierung niedriger als seine Zugfestigkeit des korrosionsbeständigen Stahls ist.

8. Kraftstoffleitung nach einem der Ansprüche 1 bis 7, wobei das Innenstahlrohr (2) ein nahtloses Stahlrohr ist.

9. Kraftstoffleitung nach einem der Ansprüche 1 bis 8, wobei das Innenstahlrohr (2) ein einwandiges, aus einem Stahlband durch Rollen hergestelltes Stahlrohr ist, wobei das Innenstahlrohr (2) als geschweißtes, einwandiges Stahlrohr ausgebildet ist.

10. Kraftstoffleitung nach einem der Ansprüche 1 bis 9, wobei das Außenstahlrohr (3) ein vorzugsweise aus einem Stahlband gefertigtes Stahlrohr ist, wobei das Außenstahlrohr (3) als geschweißtes einwandiges Stahlrohr ausgebildet ist.

11. Kraftstoffleitung nach einem der Ansprüche 1 bis 9, wobei das Außenstahlrohr (3) ein doppelwandiges, vorzugsweise durch Rollen eines Stahlbandes hergestelltes Stahlrohr ist.

12. Kraftstoffleitung nach einem der Ansprüche 1 bis 11, wobei das Innenstahlrohr (2) mit dem Außenstahlrohr (3) verlötet ist.

13. Kraftstoffleitung nach einem der Ansprüche 1 bis 12, wobei auf einer innenstahlrohrseitigen Oberfläche des Außenstahlrohrs (3) und/oder auf einer äußeren Mantelfläche des Innenstahlrohrs (2) zumindest bereichsweise eine Lotschicht, vorzugsweise eine Kupferlotschicht, aufgetragen ist, durch welche Lotschicht das Außenstahlrohr (3) mit dem Innenstahlrohr (2) verbunden ist.

14. Kraftstoffleitung nach einem der Ansprüche 1 bis 11, wobei das Innenstahlrohr (2) vorzugsweise lotfrei mit dem Außenstahlrohr (3) verpresst ist.

15. Kraftstoffleitung nach einem der Ansprüche 1 bis 14, wobei auf dem Außenstahlrohr (3) eine Verstärkungsschicht angeordnet ist.

## Claims

1. A fuel line, in particular a fuel line for a gasoline direct injection line system, with an internal steel pipe (2) and an external steel pipe (3), wherein the internal steel pipe (2) is positively accommodated in the external steel pipe (3), wherein the internal steel pipe (2) is made out of a corrosion-resistant steel, wherein the external steel pipe (3) is made out of an external steel pipe alloy, wherein a wall thickness of the internal steel pipe (2) is smaller than a wall thickness of the external steel pipe (3), **characterized in that** a maximum carbon content of the external steel pipe alloy is higher than a maximum carbon percentage of the corrosion-resistant steel, and a thickness of the fuel line (1, 1') measures between 5 % and 60 % of an inner diameter (4) of the fuel line (1, 1').

2. The fuel line according to claim 1, wherein the thickness of the fuel line (1, 1') measures at least 0.5 mm.

3. The fuel line according to one of claims 1 or 2, wherein the internal steel pipe (2) has a wall thickness of 0.05 mm to 1.00 mm.

4. The fuel line according to one of claims 1 to 3, wherein the external steel pipe (3) has a wall thickness of 0.3 mm to 2 mm.

5. The fuel line according to one of claims 1 to 4, wherein the external steel pipe (3) has an outer diameter (5) of up to 20 mm and/or wherein the internal steel pipe (2) has an inner diameter (4) of up to 10 mm.

6. The fuel line according to one of claims 1 to 5, wherein the maximum carbon content of the corrosion-resistant steel is less than or equal to 0.07 %w/w, and wherein the maximum carbon content of the external steel pipe alloy is less than or equal to 0.10 %w/w.

7. The fuel line according to one of claims 1 to 6, wherein a tensile strength of the external steel pipe alloy is less than the tensile strength of the corrosion-resistant steel.

8. The fuel line according to one of claims 1 to 7, wherein the internal steel pipe (2) is a seamless steel pipe.

9. The fuel line according to one of claims 1 to 8, wherein the internal steel pipe (2) is a single-walled steep pipe made out of a steel strip by rolling, wherein the internal steel pipe (2) is designed as a welded, single-walled steel pipe.

10. The fuel line according to one of claims 1 to 9, wherein the external steel pipe (3) is preferably a steep pipe made out of a steel strip, wherein the external steel pipe (3) is designed as a welded, single-walled steel pipe.

11. The fuel line according to one of claims 1 to 9, wherein the external steel pipe (3) is a double-walled steel pipe preferably made by rolling a steel strip.

12. The fuel line according to one of claims 1 to 11, wherein the internal steel pipe (2) is soldered with the external steel pipe (3).

13. The fuel line according to one of claims 1 to 12, wherein a soldered layer, preferably a copper soldered layer, is applied at least regionally on an internal steel pipe-side surface of the external steel pipe (3) and/or on an outer shell surface of the internal steel pipe (2), wherein the soldered layer joins the external steel pipe (3) with the internal steel pipe (2) .

14. The fuel line according to one of claims 1 to 11, wherein the internal steel pipe (2) is preferably pressed with the external steel pipe (3) without soldering.

15. The fuel line according to one of claims 1 to 14, wherein a reinforcing layer is arranged on the external steel pipe (3).

## Revendications

1. Conduite de carburant, en particulier conduite de carburant pour un système de conduite d'injection directe d'essence, avec un tuyau intérieur en acier (2) et un tuyau extérieur en acier (3), le tuyau intérieur en acier (2) étant logé par conformité de force dans le tuyau extérieur en acier (3), le tuyau intérieur en acier (2) étant fabriqué à partir d'un acier résistant à la corrosion, le tuyau extérieur en acier (3) étant fabriqué à partir d'un alliage pour tuyau extérieur en acier, une épaisseur de paroi du tuyau intérieur en acier (2) étant plus petite qu'une épaisseur de paroi du tuyau extérieur en acier (3), **caractérisée en ce qu'**une teneur en carbone maximale de l'alliage pour tuyau extérieur en acier est supérieure à une partie de carbone maximale de l'acier résistant à la corrosion et une épaisseur de la conduite de carburant (1, 1') se situe entre 5 % et 60 % d'un diamètre intérieur (4) de la conduite de carburant (1, 1').

2. Conduite de carburant selon la revendication 1, l'épaisseur de la conduite de carburant (1, 1') étant au moins de 0,5 mm.

3. Conduite de carburant selon l'une quelconque des revendications 1 ou 2, le tuyau intérieur en acier (2) comportant une épaisseur de paroi de 0,05 mm à 1,00 mm.

4. Conduite de carburant selon l'une quelconque des revendications 1 à 3, le tuyau extérieur en acier (3) comportant une épaisseur de paroi de 0,3 mm à 2 mm.

5. Conduite de carburant selon l'une quelconque des revendications 1 à 4, le tuyau extérieur en acier (3) comportant un diamètre extérieur (5) allant jusqu'à 20 mm et/ou le tuyau intérieur en acier (2) comportant un diamètre intérieur (4) allant jusqu'à 10 mm.

6. Conduite de carburant selon l'une quelconque des revendications 1 à 5, la teneur en carbone maximale de l'acier résistant à la corrosion étant inférieure ou égale à 0,07 %/poids et la teneur en carbone maximale de l'alliage pour tuyau extérieur en acier étant inférieure ou égale à 0,10 %/poids.

7. Conduite de carburant selon l'une quelconque des revendications 1 à 6, une résistance à la traction de l'alliage pour tuyau extérieur en acier étant plus faible que sa résistance à la traction de l'acier résistant à la corrosion.

8. Conduite de carburant selon l'une quelconque des revendications 1 à 7, le tuyau intérieur en acier (2) étant un tuyau en acier sans soudure.

9. Conduite de carburant selon l'une quelconque des revendications 1 à 8, le tuyau intérieur en acier (2) étant un tuyau en acier à paroi unique, fabriqué par roulage à partir d'une bande d'acier, le tuyau intérieur en acier (2) étant formé comme tuyau en acier soudé, à paroi unique.

10. Conduite de carburant selon l'une quelconque des revendications 1 à 9, le tuyau extérieur en acier (3) étant un tuyau en acier fabriqué de préférence à partir d'une bande d'acier, le tuyau extérieur en acier (3) étant constitué comme tuyau en acier soudé à paroi unique.

11. Conduite de carburant selon l'une quelconque des revendications 1 à 9, le tuyau extérieur en acier (3) étant un tuyau en acier à double paroi, fabriqué de préférence par roulage d'une bande d'acier.

12. Conduite de carburant selon l'une quelconque des revendications 1 à 11, le tuyau intérieur en acier (2) étant brasé avec le tuyau extérieur en acier (3).

13. Conduite de carburant selon l'une quelconque des revendications 1 à 12, une couche de brasage , de préférence une couche de brasage au cuivre, étant appliquée sur une surface côté tuyau intérieur en acier du tuyau extérieur en acier (3) et/ou sur une surface d'enveloppe extérieure du tuyau intérieur en acier (2) au moins par zone, couche de brasage par laquelle le tuyau extérieur en acier (3) est relié au tuyau intérieur en acier (2).

14. Conduite de carburant selon l'une quelconque des revendications 1 à 11, le tuyau intérieur en acier (2) étant compressé de préférence sans brasage avec le tuyau extérieur en acier (3).

15. Conduite de carburant selon l'une quelconque des revendications 1 à 14, une couche de renfort étant disposée sur le tuyau extérieur en acier (3).
